# EUROPEAN PATENT APPLICATION

(11) **EP 4 687 369 A1**
(43) Date of publication of application: **04.02.2026**
(21) Application number: 25193237.2
(22) Date of filing: 31.07.2025
(51) Int. Cl.: H04W 72/27, H04W 92/20

(54) **ACCESS-POINT (AP) DEVICE FOR A COORDINATION TRANSMISSION AND METHOD PERFORMING THE SAME**

(30) Priority: 31.07.2024 US 202463677474 P
(71) Applicant: MEDIATEK INC., Hsinchu City 30078 (TW)
(72) Inventor: SU, Cheng-Chien, 30078 Hsinchu City (TW); LU, Kai Ying, San Jose, 95134 (US); KU, Chung-Ta, San Jose, 95134 (US); FENG, Huai-Yan, 30078 Hsinchu City (TW); FENG, Pochun, 30078 Hsinchu City (TW)
(74) Representative: Wright, Howard Hugh Burnby

(57) **Abstract**

A coordination transmission method is provided. A first request and a first response are exchanged with a second AP, by a first AP. The first request is used for requesting to establish a first coordination agreement between the first AP and the second AP. The first response is used for indicating an allowance or a rejection for establishing the first coordination agreement between the first AP and the second AP. A coordination transmission with the second AP is performed by the first AP, during an opportunity of transmission under a condition that the establishing of the first coordination agreement between the first AP and the second AP is allowed.

## Description

### TECHNICAL FIELD

The present disclosure relates to a coordination transmission in a communication system, and particularly relates to access-point (AP) devices and a method performing the coordination transmission.

### BACKGROUND

In a traditional wireless communication system including multiple access-point (AP) devices and corresponding station (STA) devices, data transmission of the AP devices are managed by a central controller of an upper layer application. For example, this upper-layer central controller organizes a grouping of the AP devices, such that some of the AP devices within a same group may perform coordination transmission(s).

However, the managing scheme by the central controller may lack efficiency and flexibility. For example, the AP devices disposed and managed by a family group cannot perform coordination transmission(s) with those disposed in the neighborhood.

In view of the above issues, it is desirable to provide an distributed (i.e., de-centralized) mechanism, which can better facilitate the coordination transmission(s) among the AP devices.

### SUMMARY

According to one embodiment of the present disclosure, a coordination transmission method is provided. A first request and a first response are exchanged with a second AP, by a first AP. The first request is used for requesting to establish a first coordination agreement between the first AP and the second AP. The first response is used for indicating an allowance or a rejection for establishing the first coordination agreement between the first AP and the second AP. A coordination transmission with the second AP is performed by the first AP, during an opportunity of transmission under a condition that the establishing of the first coordination agreement between the first AP and the second AP is allowed.

According to another embodiment of the present disclosure, an access-point (AP) is provided. The AP includes a transceiver and a processor. The transceiver is configured to transmit and receive data and messages wirelessly. The processor is coupled to the transceiver and configured to perform the following operations: exchanging, via the transceiver, a first request and a first response with a second AP, wherein the first request is used for requesting to establish a first coordination agreement between the AP and the second AP, and the first response is used for indicating an allowance or a rejection for establishing the first coordination agreement between the AP and the second AP. Performing, via the transceiver, a coordination transmission with the second AP during an opportunity of transmission (TXOP) under a condition that the establishing of the first coordination agreement between the AP and the second AP is allowed.

### BRIEF DESCRIPTION OF THE DRAWINGS

FIG. 1 is a schematic diagram of a communication system 1000 according to an embodiment of the present disclosure.
FIG. 2A is a block diagram of one of the AP devices 100~106 in FIG. 1, in which the AP device 101 is taken as an example.
FIG. 2B is a block diagram of the storage unit 20 in FIG. 2A.
FIG. 2C is a schematic diagram illustrating the messages transmitted and received by the transceiver 30.
FIG. 3A is a schematic diagram illustrating operation of the beacon frame BCN among the AP devices 101, 102 and 103.
FIG. 3B is a schematic diagram illustrating operation of the request REQ and response RSP among the AP devices 101, 102 and 103.
FIG. 3C is a schematic diagram illustrating operation of the leave message LEV by the AP device 103.
FIG. 4 is a flow diagram of a method for coordination transmission among the AP devices 101, 102 and 103 according to an embodiment of the present disclosure.
FIG. 5 is a flow diagram of a method for coordination transmission among the AP devices 101, 102 and 103 according to another embodiment of the present disclosure.
FIG. 6 is a timing diagram illustrating three phases of the AP devices 101 and 102.
FIG. 7 is a schematic diagram illustrating coordination pairs among the AP devices 100~106 in FIG. 1.
FIG. 8 is a schematic diagram illustrating a method for coordination transmission among the AP devices 101, 102 and 103 according to still another embodiment of the present disclosure.
FIG. 9 is a flow diagram of a method for coordination transmission among the APs according to still another embodiment of the present disclosure.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

### DETAILED DESCRIPTION

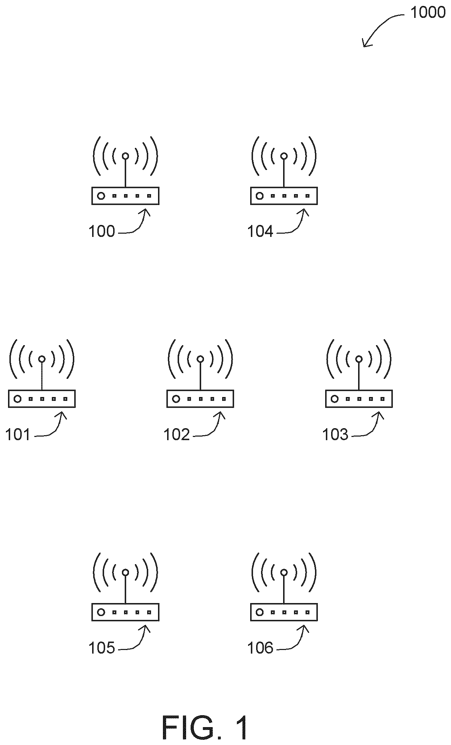

FIG. 1 is a schematic diagram of a communication system 1000 according to an embodiment of the present disclosure. The communication system 1000 includes several access point (AP) devices. In the example of FIG. 1, the communication system 1000 exemplarily includes seven AP devices 100~106 (the number of the AP devices is not limited to the example of FIG. 1). Each of the AP devices 100~106 may perform wireless communication with corresponding station (STA) devices (not shown in FIG. 1) according to Wi-Fi standards.

In the operation of the communication system 1000, the AP devices 100~106 may compete for an opportunity of transmission (TXOP), and the AP device 101 obtains the TXOP. Furthermore, the AP device 101 may establish a coordination agreement with another AP device (e.g., AP device 102), wherein the establishment of a coordination agreement between the AP device 101 and the AP device 102 indicates the establishment of a coordination pair between the AP device 101 and the AP device 102. Then, the AP device 101 and another AP device (e.g., AP device 102) can perform coordination transmission during the TXOP. Performing coordination transmission means that during the TXOP, AP device 101 and AP device 102 transmit data to their respective STAs coordinately. The coordination transmission may have various types, which comprise coordination spatial reuse (CSR) transmission, coordination beamforming (CBF) transmission and coordination time division multiple access (CTDMA) transmission, etc. With the coordination transmission, the AP device 102 can transmit data concurrently with the AP device 101 within the same time period. Because the AP device 101 obtains TXOP in this embodiment, the AP device 101 is deemed as sharing the TXOP to the AP device 102. Accordingly, the AP device 101 is referred to as a "sharing AP device", and the AP device 102 is referred to as a "shared AP device".

Each of the AP devices 100~106 may maintain a list to record identifiers of coordinated AP device(s) that forms a coordination pair with itself. Such a list is referred to as a "multi-AP (MAP) list". For example, the AP device 101 (which obtains the TXOP and hence serves as a sharing AP device) records an identifier of the AP device 102 in the MAP list.

Furthermore, a coordination agreement between two AP devices can be teared down. That is, coordination pair(s) may also be dynamically adjusted. For example, the AP devices 101 and 102 originally establish a coordination agreement (i.e., form a coordination pair). However, the AP device 102 may tear down the original coordination pair with the AP device 101 when necessary, and the AP device 102 may form a new coordination pair with the AP device 103 to perform coordination transmission.

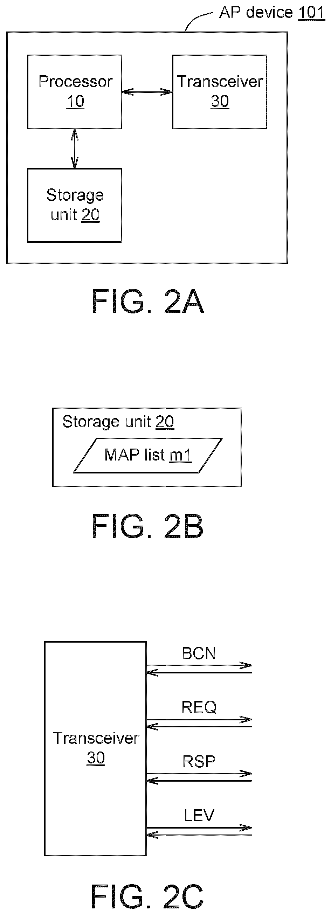

FIG. 2A is a block diagram of one of the AP devices 100~106 in FIG. 1, in which the AP device 101 is taken as an example. As shown in FIG. 2A, the AP device 101 includes a processor 10, a storage unit 20 and a transceiver 30. The processor 10 may be any type of hardware processor, e.g., a central processing unit (CPU), a micro control unit (MCU) or a digital signal processor (DSP), etc. The processor 10 is operatively coupled to the storage unit 20 and the transceiver 30, such that the processor 10 may be configured to access the storage unit 20 and control the transceiver 30.

The transceiver 30 may include a transmitter and a receiver for transmitting and receiving messages of the AP device 101. The messages are used to perform handshaking to establish or tear down the coordination pair formed by the AP device 101 and other AP device. Likewise, the transceiver 30 also is used for transmitting and receiving data of the AP device 101. The data may be conveyed between the AP device 101 and corresponding STA devices.

FIG. 2B is a block diagram of the storage unit 20 in FIG. 2A. The storage unit 20 may be any type of hardware storage device or memory device, e.g., a hard-disc, a flash drive, a random access memory (RAM), and a read only memory (ROM), etc. The storage unit 20 may be used to store essential information for the AP device 101 to establish and tear down the coordination agreement (i.e., the coordination pair) and perform coordination transmission. For example, the storage unit 20 may store the MAP list m1 of the AP device 101. The processor 10 of the AP device 101 may be configured to access the MAP list m1 in the storage unit 20, such that the AP device 101 may add an identifier of an AP that forms a coordination pair with the AP device 101 into the MAP list m1 or remove an identifier of an AP from the MAP list m1.

FIG. 2C is a schematic diagram illustrating the messages transmitted and received by the transceiver 30. As shown in FIG. 2C, the messages may include a broadcast message (e.g., a beacon frame BCN), a request REQ, a response RSP and a leave message LEV. In one example, the request REQ, the response RSP and the leave message LEV may be implemented by "management frames" which are specified in the Wi-Fi standard.

The broadcast message contains information about a coordination capability of the AP device 101. The coordination capability may indicate whether the AP device 101 can support coordination transmission with other AP device(s). In some embodiments, the coordination capability may indicate the type of coordination transmission supported by the AP device, wherein the type of coordination transmission comprises at least one of a CSR transmission, a CBF transmission, and a CTDMA transmission. In one example, the processor 10 of the AP device 101 may be configured to control the transceiver 30 to periodically broadcast the broadcast message.

Furthermore, the request REQ is referred to as a "coordination agreement establishment request" for requesting an establishment of a coordination agreement with another AP device. The coordination agreement establishment request may be referred as a coordination transmission pairing request. For example, the processor 10 of the AP device 101 may be configured to control the transceiver 30 to send the request REQ to the transceiver (not shown) of the AP device 102, requesting to establish a coordination pair with the AP device 102.

Moreover, the response RSP is referred to as a "coordination agreement establishment response" for replying to the request REQ sent by other AP device(s). The coordination agreement establishment response may be referred as a coordination transmission pairing response. The response RSP may indicate "allowance" or "rejection" for the request of establishing a coordination pair. For example, when the transceiver 30 of the AP device 101 receives a request REQ sent by the AP device 102, the transceiver 30 of the AP device 101 may send a response RSP to the AP device 102. If the response RSP indicates "rejection" for the establishment of a coordination pair with the AP device 102, coordination pair between the AP devices 101 and 102 will not be established.

On the other hand, if the transceiver 30 of the AP device 101 sends a response RSP indicating "allowance" to the AP device 102, a coordination pair between the AP devices 101 and 102 will be established, and the identifier of the AP device 102 will be recorded in the MAP list m1 in the storage unit 20 of the AP device 101. Reciprocally, the identifier of the AP device 101 is also recorded in the MAP list in the storage unit (not shown) of the AP device 102.

In addition, the leave message LEV (which is sent by the transceiver 30 of the AP device 101) is used to inform the coordinated AP device(s) that, the AP device 101 tends to tear down the established coordination agreement (i.e., tear down the established coordination pair). Likewise, if the transceiver 30 of the AP device 101 receives a leave message LEV from another AP device (e.g., the AP device 102), the AP device 101 may also tear down the coordination pair with this AP device. In other words, no matter the AP device 101 sends the leave message LEV to another AP device or the AP device 101 receives the leave message LEV from another AP device, the AP device 101 will tear down the coordination pair with this AP device.

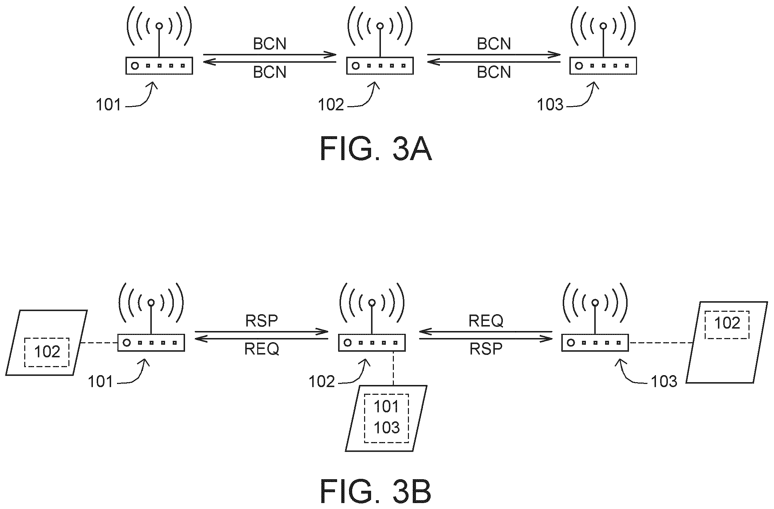

FIG. 3A is a schematic diagram illustrating operation of the beacon frames BCN among the AP devices 101, 102 and 103. As shown in FIG. 3A, each of the AP devices 101, 102 and 103 may broadcast beacon frame BCN periodically, and the broadcasted beacon frame BCN may be received by neighboring AP device(s). For example, the AP device 101 broadcasts a beacon frame BCN, which is received by the neighboring AP device 102 (the beacon frame BCN sent by AP device 101 may not arrive the AP device 103 which is far away from the AP device 101). Likewise, the AP device 103 broadcasts a beacon frame BCN, which is received by the neighboring AP device 102 and may not be received by the AP device 101.

Furthermore, the AP device 102 (which may be disposed at between the AP devices 101 and 103) broadcasts beacon frame BCN, which may be received by the neighboring AP devices 101 and 103 respectively.

Based on the beacon frame BCN from the AP device 101, the AP device 102 may realize the coordination capability of the AP device 101, so as to determine the type of coordinated transmission that AP1 can support (e.g., CSR transmission, CBF transmission or CTDMA transmission, etc.). Based on the beacon frame BCN from the AP device 103, the AP device 102 may realize the coordination capability of the AP device 103, so as to determine the type of coordinated transmission that AP3 can support (e.g., CSR transmission, CBF transmission or CTDMA transmission, etc.). Likewise, the AP device 101 may also realize the coordination capability of the AP device 102 based on the beacon frame BCN from the AP device 102, so as to determine the type of coordinated transmission that AP2 can support. Likewise, the AP device 103 may also realize the coordination capability of the AP device 102 based on the beacon frame BCN from the AP device 102, so as to determine the type of coordinated transmission that AP2 can support.

FIG. 3B is a schematic diagram illustrating operation of the request REQ and response RSP among the AP devices 101, 102 and 103. As shown in FIG. 3B, the AP device 102 has a requirement of coordination transmission, and the AP device 102 realizes that the neighboring AP device 101 can support coordination transmission (based on the beacon frame BCN from the AP device 101). Accordingly, the AP device 102 may send a request REQ to the AP device 101, requesting to establish a coordination pair with the AP device 101.

Upon reception of the request REQ by the AP device 102, if the AP device 101 is capable of performing coordination transmission in the coming time periods, the AP device 101 may reply to the AP device 102 with a response RSP indicating "allowance". In this manner, through the handshaking achieved by the request REQ and the response RSP, a coordination pair will be established between the AP devices 101 and 102. Furthermore, the identifiers of the AP devices 101 and 102 will be recorded in the MAP list of each other. That is, the MAP list of the AP device 101 may record the identifier of the coordinated AP device 102, and the MAP list of the AP device 102 may also record the identifier of the coordinated AP device 101 reciprocally.

Likewise, the AP device 102 may receive a request REQ for requesting to establish a coordination pair with the AP device 102 from the AP device 103. Upon reception of the request REQ by the AP device 102, if the AP device 102 is capable of performing coordination transmission in the coming time periods, the AP device 102 may reply to the AP device 103 with a response RSP indicating "allowance". In this manner, through the handshaking achieved by the request REQ and the response RSP, a coordination pair will be established between the AP devices 103 and 102. Furthermore, the identifiers of the AP devices 103 and 102 will be recorded in the MAP list of each other. That is, the MAP list of the AP device 102 not only includes the identifier of the AP device 101 as previously recorded, the identifier of the AP device 103 is also added to the MAP list of the AP device 102.

Thereafter, if one of the AP devices 101 and 102 obtains the TXOP, this TXOP owned AP device may share the TXOP to the other of the AP devices 101 and 102. Accordingly, the AP devices 101 and 102 can perform a coordination transmission (e.g., CSR transmission, CBF transmission or CTDMA transmission, etc.) in the TXOP. In some embodiments, if the AP device 102 obtains the TXOP, the AP device 102 can perform the coordination transmission with two AP devices 101 and 103 simultaneously.

During the coordination transmission, any AP device in the coordination pair(s) may tend to tear down the coordination pair(s) for some conditions. For example, in one condition, if one AP device of the coordination pair does not need to transmit data for a predefine time period, this AP device may tend to tear down its coordination pair. For example, when AP 102 has no data to transmit, AP 102 may transmit Leave message to AP 101 and delete AP 101 from the MAP list of the AP device 102. AP 101 receives Leave message and delete AP 102 from the MAP list of the AP device 101.

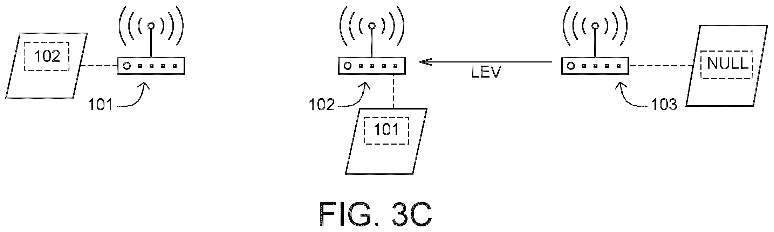

In another condition, if one AP device of the coordination pair detects that the overall performance of the coordination transmission degrades, this AP device may also tend to tear down its coordination pair. The coordination pair may be teared down based on the leave message LEV, as will be discussed in the following paragraphs by reference to FIG. 3C. In some embodiments, AP device 101 (or AP device 103) finds an overall performance degrades when AP device 101 (or AP device 103) and AP device 102 performs coordinated transmission, and AP device 101 (or AP device 103) may delete AP 102 from the MAP list of the AP device 101 (or AP device 103). AP device 101 (or AP device 103) may transmit Leave message to AP device 102. AP device 102 deletes AP device 101 (or AP device 103) from the MAP list of the AP device 102. Alternatively, AP device 102 finds an overall performance degrades when AP device 101 (or AP device 103) and AP device 102 performs coordinated transmission and transmits a leave message to AP device 101 (or AP device 103). AP device 102 deletes AP device 101 (or AP device 103) from the MAP list of the AP device 102 and AP device 101 (or AP device 103) may delete AP 102 from the MAP list of the AP device 101 (or AP device 103). If a combined data throughput of two APs is lower than the data throughput of one AP in the two APs before the coordination transmission, the overall performance of the coordination transmission degrades. For example, original data throughput of the one AP in the two APs is 500 Mbps. If the combined data throughput of two APs is 400 Mbps, the overall performance of the coordination transmission degrades.

After the AP devices 101, 102 and 103 are added to the MAP list(s) among one another, the AP devices 101, 102 and 103 may be maintained in the MAP list(s) for a validity period. Information about such a validity period may be contained in the response RSP or the request REQ. For example, after AP device 102 is added into the MAP list of AP device 101, the AP device 102 may be maintained in the list for a validity period. Coordination transmission pairing Response from AP 101 to AP 102 may comprise information for indicating the validity period for the AP 102. Alternatively, Coordination transmission pairing Request from AP 102 to AP 101 may comprise information for indicating a validity period for AP 102. If AP 101 thinks that the validity period is not proper, AP 101 may assign an updated validity period to AP 102. The validity period may be a multiple of a target-beacon-transmission-time (TBTT). Accordingly, in still another condition for turning down the coordination pair between two AP devices, when anyone of the two AP devices detects that the validity period of one of two AP devices for the coordination pair is expired, this expired AP device may be removed from the MAP list(s) of the corresponding AP, and the coordination pair between two AP devices is tear downed.

FIG. 3C is a schematic diagram illustrating operation of the leave message LEV by the AP device 103. As shown in FIG. 3C, if the AP device 103 does not need to transmit data for a predefine time period, or the AP device 103 detects a degradation of the overall performance of the coordination transmission with the AP device 102, the AP device 103 may tend to tear down the coordination pair with the AP device 102.

The AP device 103 may send a leave message LEV to the AP device 102, and the identifier of the AP device 102 may be removed from the MAP list of the AP device 103. Accordingly, the coordination pair between the AP devices 102 and 103 is tear downed, and the MAP list of the AP device 103 indicates "NULL", meaning that the AP device 103 does not establish the coordination agreement with any AP devices.

Furthermore, upon the reception of the leave message LEV by the AP device 102, the AP device 102 may remove the AP device 103 from its MAP list. Accordingly, the MAP list of the AP device 102 records only the identifier of AP device 101. In other words, when the AP device 103 sends the leave message LEV, or the coordinated AP device 102 receives the leave message LEV from the AP device 103, the coordination pair between the AP devices 102 and 103 will be tear downed.

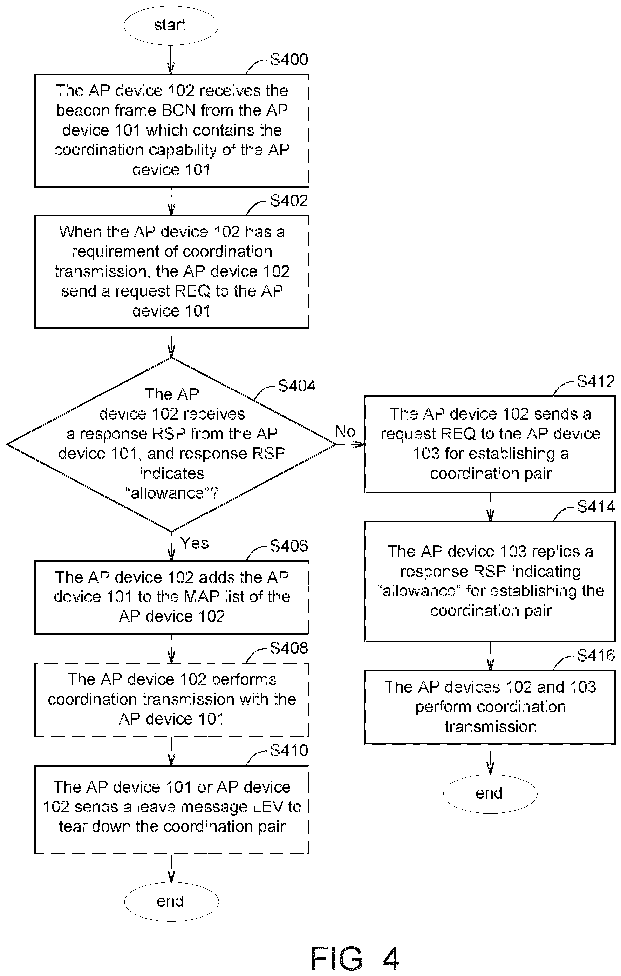

FIG. 4 is a flow diagram of a method for coordination transmission among the AP devices 101, 102 and 103 according to an embodiment of the present disclosure. The method for coordination transmission illustrated by FIG. 4 may be executed by the AP device 102 of the communication system 1000 of FIG. 1 and may correspond to the examples illustrated by FIGS. 3A to 3C. As shown in FIG. 4, firstly, in step S400, the AP device 102 receives the broadcast message (e.g., beacon frame BCN) from the AP device 101 (corresponding to the example of FIG. 3A). Based on the information about the coordination capability, which is contained in broadcast message (e.g., beacon frame BCN) from the AP device 101, the AP device 102 may realize that the AP device 101 can support coordination transmission. In some embodiments, in step S400, the AP device 102 also receives the broadcast message (e.g., beacon frame BCN) from the AP device 103. Based on the information about the coordination capability, which is contained in broadcast message (e.g., beacon frame BCN) from the AP device 103, the AP device 102 may realize that the AP device 103 can support coordination transmission.

Then, in step S402, when the AP device 102 has a requirement of coordination transmission and tends to establish a coordination pair with the AP device 101, the AP device 102 may send a request REQ to the AP device 101 to request an establishment of a coordination pair (corresponding to the example of FIG. 3B), wherein the request REQ may be a coordination transmission pairing request. Then, in step S404, the AP device 102 may receive a response RSP from the AP device 101 (corresponding to the example of FIG. 3B), wherein the response RSP may be a coordination transmission pairing response. When the response RSP of the AP device 101 indicates "allowance" for establishing a coordination pair with AP device 102, step 406 will be executed. In step S406, AP device 102 adds the identifier of the AP device 101 to the MAP list of the AP device 102. Then, in step S408, the AP devices 102 may perform coordination transmission with the AP device 101. For example, the AP device 102 and the AP device 101 may simultaneously transmit data to their respective STA devices.

Then, in step S410, if the AP device 102 does not need to transmit data for a predefine time period, or the AP device 102 detects a degradation of the overall performance of the coordination transmission with the AP device 101, the AP device 102 may tear down the coordination pair with the AP device 101. The coordination pair may be tear downed by a triggering of a leave message LEV sent by the AP device 102 (not shown in the example of FIG. 3C). Alternatively, if the AP device 101 tends to tear down the coordination pair, the AP device 102 may receive a leave message LEV from the AP device 101, and the coordination pair will be tear downed upon the leave message LEV. Furthermore, the AP device 102 removes the identifier of the AP device 101 from the MAP list of the AP device 102.

On the other hand, in step S404 when the response RSP of the AP device 101 indicates "rejection" for establishing a coordination pair with AP device 102, means that the AP device 102 cannot perform coordination transmission with the AP device 101. Therefore, step S412 will be executed. In step S412, the AP device 102 may request other AP devices to establish a coordination pair, so as to perform coordination transmission. For example, the AP device 102 may send a request REQ to the AP device 103 for establishing a coordination pair (corresponding to the example of FIG. 3B) based on a coordination capability of the AP device 103 indicated by information contained in the broadcast message from the AP device 103.

Then, in step S414, the AP device 103 replies a response RSP indicating "allowance" for establishing a coordination pair with AP device 102, the AP device 102 adds the identifier of the AP device 103 to the MAP list of the AP device 102. Then, in step S416, the AP devices 102 and 103 may perform a coordination transmission.

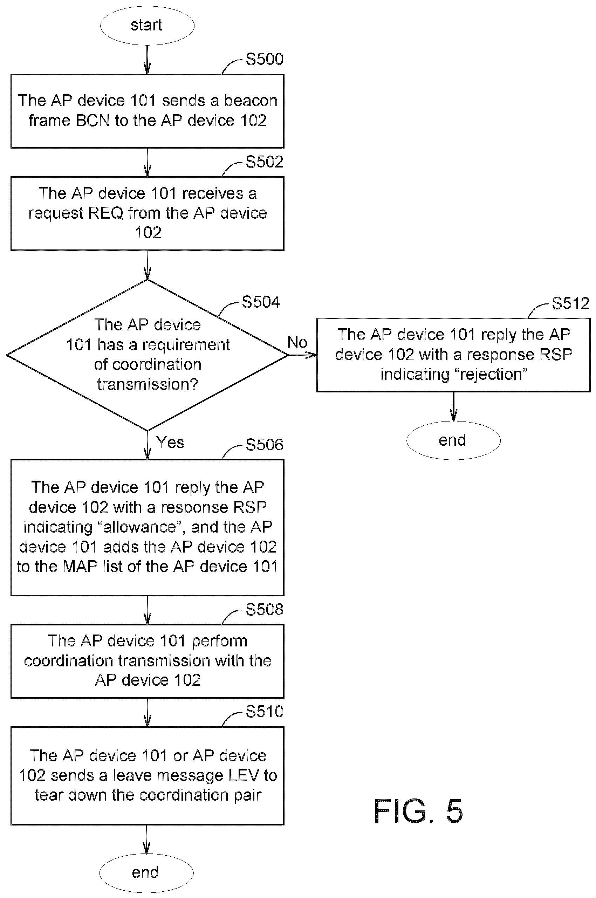

FIG. 5 is a flow diagram of a method for coordination transmission among the AP devices 101, 102 and 103 according to another embodiment of the present disclosure. The method for coordination transmission illustrated by FIG. 5 may be executed by the AP device 101 of the communication system 1000 of FIG. 1 and may correspond to the examples illustrated by FIGS. 3A to 3C. As shown in FIG. 5, firstly, in step S500, the AP device 101 sends a broadcast message (e.g., beacon frame BCN) to the AP device 102 (corresponding to the example of FIG. 3A). The AP device 102 may realize that the AP device 101 can support coordination transmission based on the coordination capability contained in the broadcast message (e.g., beacon frame BCN) from the AP device 101. Then, in step S502, the AP device 101 may receive a request REQ from the AP device 102 which requests an establishment of a coordination pair, wherein the request REQ may be a coordination transmission pairing request.

Then, in step S504, the AP device 101 determines whether the AP device 101 has a requirement of coordination transmission and tends to establish a coordination pair with the AP device 102. When the AP device 101 has a requirement of coordination transmission, step 506 will be executed. In step S506, the AP device 101 may reply the AP device 102 with a response RSP indicating "allowance" for the establishment of a coordination pair which is requested by the AP device 102, wherein the response RSP may be a coordination transmission pairing response. Furthermore, the AP device 101 adds the identifier of the AP device 102 to the MAP list of the AP device 101. Then, in step S508, the AP device 101 may perform coordination transmission with the AP device 102, such that the AP device 101 and the AP device 102 may simultaneously transmit data to their respective STA devices.

Then, in step S510, if the AP device 101 does not need to transmit data for a predefine time period or detects a degradation of the overall performance of the coordination transmission with the AP device 102, the AP device 101 may send a leave message LEV to the AP device 102 so as to tear down the coordination pair. Alternatively, if the AP device 102 tends to tear down the coordination pair, the AP device 101 may receive a leave message LEV from the AP device 102 and the coordination pair will be tear downed. Furthermore, the AP device 101 removes the identifier of the AP device 102 from the MAP list of the AP device 101.

On the other hand, in step S504 when the AP device 101 determines that it does not have a requirement of coordination transmission, step 512 will be executed. In step S512, the AP device 101 may reply to the AP device 102 with a response RSP indicating "rejection" for the establishment of a coordination pair.

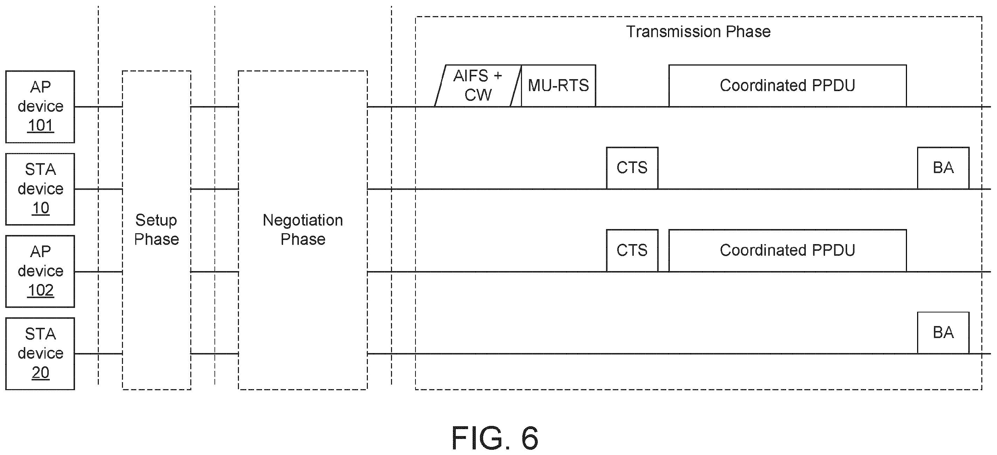

FIG. 6 is a timing diagram illustrating three phases of the communication of the AP devices 101 and 102. As shown in FIG. 6, the communication of the AP devices 101 and 102 may include a setup phase, a negotiation phase and a transmission phase.

In the setup phase, the AP devices 101 and 102 may broadcast the broadcast message (e.g., beacon frame BCN) to inform the coordination capability to each other. With the broadcast message (e.g., beacon frame BCN), the AP devices 101 and 102 may exchange information about their coordination capability, so as to realize whether the AP device 101 and/or the AP device 102 can support to perform coordination transmission. In some embodiments, the coordination capability may indicate the type of coordination transmission supported, wherein the type of coordination transmission comprises at least one of a CSR transmission, a CBF transmission and a CTDMA transmission.

If the AP devices 101 and 102 can support coordination transmission, one of the AP devices 101 and 102 may send the request REQ to request the establishment for the coordination agreement, between the AP devices 101 and 102. Furthermore, the other one of the AP devices 101 and 102 may reply with a response RSP for the request REQ. If the response RSP indicating "allowance", the coordination agreement may be established for the AP devices 101 and 102, and then the AP device 101 may add identifier of the AP device 102 to its MAP list and the AP device 102 may add identifier of the AP device 101 to its MAP list. The establishment of a coordination agreement between the AP device 101 and the AP device 102 indicates the establishment of a coordination pair between the AP device 101 and the AP device 102.

The AP device 101 (or the AP device 102) may be assigned with an identifier. Such an identifier may be an "association identifier (AID)". In one example, the AID may be contained in the response RSP. For example, as the AP device 101 receives the response RSP from the AP device 102, the AP device 101 may retrieve the AID of the AP device 102 from the response RSP, and then the AP device 101 may add the AID of the AP device 102 to the MAP list of the AP device 101. In another example, the AID may be contained in the request REQ. For example, the AP device 102 may transmit a request REQ, which contains the AID of the AP device 102, to the AP device 101.

Alternatively, the AP devices 101 and 102 may assign the AID(s) to each other. For example, AP device 101 may assign an AID to AP device 102, and AP device 102 may assign an AID to AP device 101.

Thereafter, in the negotiation phase subsequent to the setup phase, the AP devices 101 and 102 may exchange operating information of each other. In one example, the operating information of each AP device may include a configuration of corresponding STA devices affiliated to the that AP device. In the example of FIG. 6, a STA device 10 is affiliated to the AP device 101, while another STA device 20 is affiliated to the AP device 102, which are indicated by the afore-mentioned configuration. In one example, the operating information may include some parameters (e.g., negotiated parameters) which can help to determine whether the coordination transmission (e.g., a CSR transmission, a CBF transmission or a CTDMA transmission) can be successfully performed.

Furthermore, the operating information may include a transmission power associated with each of the AP devices 101 and 102. More particularly, the transmission power may be indicated by an RSSI information. For example, when the STA device 10 affiliated to the AP device 101 receives signal from the AP device 101, the STA device 10 may perform an RSSI measurement to obtain the RSSI information associated with the AP device 101. Then, the STA device 10 may provide the RSSI information to the AP device 101. Thereafter, the AP device 101 may inform the AP device 102 the RSSI information of the STA device 10. Accordingly, based on RSSI information, the AP device 102 may control the power of transmission signal sent to its corresponding STA device 20, so as to avoid interfering the transmission for the STA device 10.

Thereafter, in the transmission phase subsequent to the negotiation phase, the AP device 101 obtains the TXOP in the contention window and called as a "sharing AP". The AP device 101 may send a RTS frame (e.g., a "MU-RTS" frame) which contains the AID and a MAC address of the AP device 102 for notifying that AP device 101 will perform coordination transmission and which type of coordination transmission will be performed, for example, CSR transmission.

Then, AP device 102 receives the "MU-RTS" frame from the AP device 101 and transmits a "CTS" frame to AP device 101, and STA 10 receives the "MU-RTS" frame from the AP device 101 and transmits a "CTS" frame to AP device 101.

Subsequent to the "CTS" frames, the AP devices 101 and 102 may transmit a "coordinated PPDU" to their corresponding STA device, concurrently. The "coordinated PPDU" may carry data payload. In one example, the transceiver of each of the AP devices 101 and 102 may function to transmit the "coordinated PPDU". Taking the AP device 101 as an example, referring back to FIG. 2A, the processor 10 of the AP device 101 may be configured to control the transceiver 30 to transmit the "coordinated PPDU".

Upon completion of transmission of the "coordinated PPDU" of AP 101, the STA 10 may transmit "BA" frame to the AP 101, to acknowledge the transmission of the "coordinated PPDU" of AP 101. Upon completion of transmission of the "coordinated PPDU" of AP 102, the STA 20 may transmit "BA" frame to the AP 102, to acknowledge the transmission of the "coordinated PPDU" of AP 102.

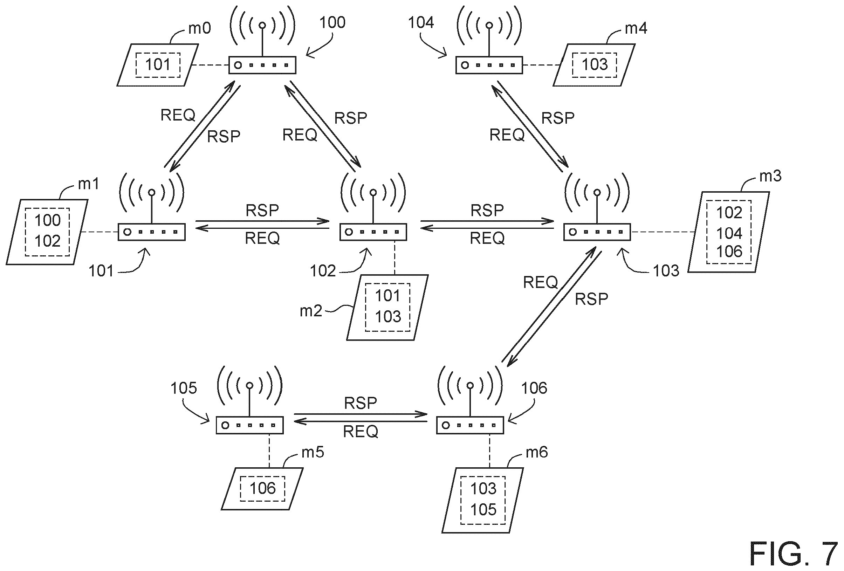

FIG. 7 is a schematic diagram illustrating coordination pairs among the AP devices 100~106 in FIG. 1. The identifier (e.g., AID) recorded in the MAP list of each AP device among the AP devices 100~106 is that, the identifier (e.g., AID) of an associated AP device that has established a coordinated transmission pair with this AP device. In the example of FIG. 7, as the coordination pair between the AP device 101 and the AP device 100 is established, the identifier (e.g., AID) of the AP 100 is recorded in the MAP list m1 of the AP 101, and vice versa, the identifier (e.g., AID) of the AP 101 is recorded in the MAP list m0 of the AP 100.

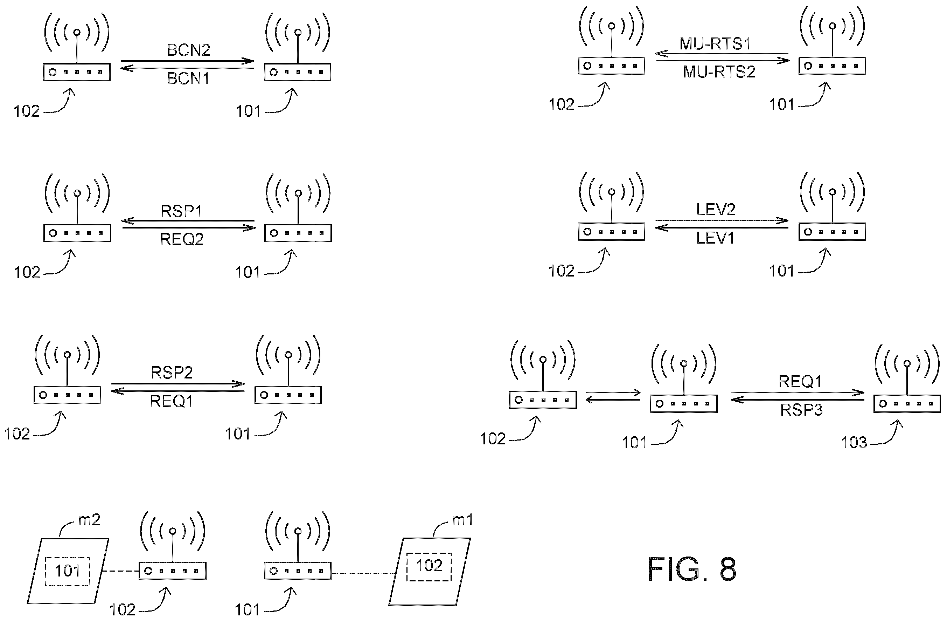

FIG. 8 is a schematic diagram illustrating a method for coordination transmission among the AP devices 101, 102 and 103 according to still another embodiment of the present disclosure. As shown in FIG. 8, the first AP device 101 is configured to broadcast a first broadcast message (e.g., a beacon frame BCN1) comprising a coordination capability of the first AP device 101. The coordination capability of the first AP device 101 indicates a type of the coordination transmission supported by the first AP device 101. Furthermore, the first AP device 101 is configured to receive a second broadcast message (e.g., a beacon frame BCN2) comprising a coordination capability of the second AP device 102, which indicates a type of the coordination transmission supported by the second AP device 102. The type of the coordination transmission comprises at least one of a CSR transmission, a CBF transmission, and a CTDMA transmission.

Thereafter, the first AP device 101 is configured to exchange a first request and a first response with the second AP device 102. The first request is used for requesting to establish a first coordination agreement between the first AP device 101 and the second AP device 102. The first response is used for indicating an allowance or a rejection for establishing the first coordination agreement between the first AP device 101 and the second AP device 102. In one example, the first AP device 101 receives the first request (e.g., the request REQ2) from the second AP device 102, and the first AP device 101 transmits the first response (e.g., the response RSP1) to the second AP device 102. In another example, the first AP device 101 transmits the first request (e.g., the request REQ1) to the second AP device 102, and the first AP device 101 receives the first response (e.g., the response RSP2) from the second AP device.

Furthermore, the first AP device 101 records an identifier (e.g., AID) of the second AP device 102 in a first coordination transmission AP list (e.g., a first MAP list m1) of the first AP device 101 under a condition that the establishing of the first coordination agreement between the first AP device 101 and the second AP device 102 is allowed. Likewise, the AID of the first AP device 101 is recorded in a second coordination transmission AP list (e.g., a second MAP list m2) of the second AP device 102.

Moreover, after the establishing of the first coordination agreement between the first AP device 101 and the second AP device 102 is allowed, the AP device 101 exchanges an operating information with second AP device 102. The operating information comprises information of several STA devices affiliated to a corresponding one of the first AP device 101 and the second AP device 102 and several parameters associated with the coordination transmission. The parameters are, for example, "negotiated parameters" which can help to determine whether the coordination transmission (e.g., a CSR transmission, a CBF transmission or a CTDMA transmission) can be successfully performed.

In addition, the first AP device 101 receives a RTS frame (e.g., the MU-RTS2) from the second AP device 102 if the second AP device 102 obtains the TXOP. Alternatively, the first AP device 101 transmits the RTS frame (e.g., the MU-RTS1) to the second AP device 102 if the first AP device 101 obtains the TXOP. The RTS frame notifies which type of the coordination transmission is to be performed during the TXOP. When any one of the first AP device 101 and the second AP device 102 obtains the TXOP, the coordination transmission between the first AP device 101 and the second AP device 102 may be performed during the TXOP.

In some embodiments, the first AP device 101 may form the coordination transmission pair with any nearby AP (e.g., the AP devices 102 and 103). When the first AP device 101 wants to form the coordination transmission pair with a nearby AP, it is not needed to obtain consent from the AP that is in the MAP list of the first AP device 101.

When a degradation of an overall performance of the coordination transmission is detected, the first AP device 101 transmits the first leave message (e.g., leave message LEV1) to the second AP device 102 or receives the second leave message (e.g., leave message LEV2) from the second AP device 102, so as to tear down the first coordination agreement between the first AP device 101 and the second AP device 102. Alternatively, when an expiration of a validity period of the second AP device 102, which is maintained in the first MAP list m1, is detected by the first AP device 101, the identifier of the second AP device 102 is deleted from the first MAP list m1 of the first AP device 101.

In some example, the first AP device 101 may further establish a coordination agreement with other AP device (e.g., the third AP device 103) than the second AP device 102. More particularly, the first AP device 101 exchanges a second request (e.g., the request REQ1, which is used for requesting to establish a second coordination agreement between the first AP device 101 and the third AP device 103) and a second response (e.g., the response RSP3, which is used for indicating an allowance or a rejection for establishing the second coordination agreement between the first AP device 101 and the third AP device 103). Under a condition that the establishing of the first coordination agreement between the first AP device 101 and the second AP device 102 and the establishing of the second coordination agreement between the first AP device 101 and the third AP device 103 are allowed, the first AP device 101 performs the coordination transmission with the second AP device 102 and the third AP device 103, during the TXOP obtained by the first AP device 101.

The first AP device 101 may refer to a "first AP", while the second AP device 102 may refer to a "second AP".

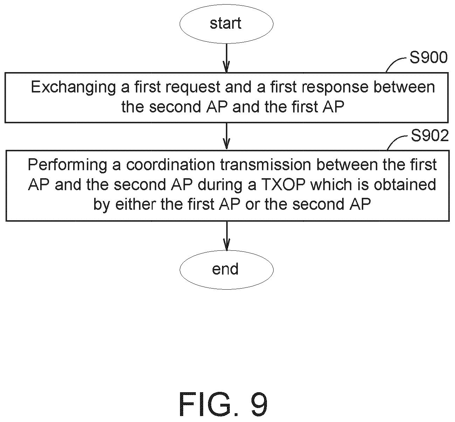

FIG. 9 is a flow diagram of a method for coordination transmission among the APs according to still another embodiment of the present disclosure. The method may comprise the following steps:

At step S900, a first AP exchanges a first request and a first response with a second AP.

The first request is used for requesting to establish a first coordination agreement between the first AP and the second AP. The first response is used for indicating an allowance or a rejection for establishing the above-mentioned first coordination agreement. In one example, step S900 may include: receiving the first request from the second AP, and transmitting the first response to the second AP. In another example, step S900 may include: transmitting the first request to the second AP, and receiving the first response from the second AP.

At step S902, a first AP performs the coordination transmission with the second AP during the TXOP under a condition that the establishing of the first coordination agreement between the first AP and the second AP is allowed.

Specifically, after the establishing of the first coordination agreement between the first AP and the second AP is allowed, when either the first AP or the second AP obtains the TXOP, the coordination transmission is performed during the TXOP.

It will be apparent to those skilled in the art that various modifications and variations can be made to the disclosed embodiments. It is intended that the specification and examples be considered as exemplars only, with a true scope of the disclosure being indicated by the following claims and their equivalents.

## Claims

1. A coordination transmission method, comprising:
exchanging, by a first access-point (AP), a first request and a first response with a second AP, wherein the first request is used for requesting to establish a first coordination agreement between the first AP and the second AP, and the first response is used for indicating an allowance or a rejection for establishing the first coordination agreement between the first AP and the second AP; and
performing, by the first AP, a coordination transmission with the second AP during an opportunity of transmission (TXOP) under a condition that the establishing of the first coordination agreement between the first AP and the second AP is allowed.

2. The coordination transmission method of claim 1, wherein after the establishing of the first coordination agreement between the first AP and the second AP is allowed, when either the first AP or the second AP obtains the TXOP, the coordination transmission is performed during the TXOP.

3. The coordination transmission method of claim 1 or claim 2, wherein the step of exchanging the first request and the first response with the second AP comprising:
receiving the first request from the second AP; and
transmitting the first response to the second AP.

4. The coordination transmission method of claim 1 or claim 2, wherein the step of exchanging the first request and the first response with the second AP comprising:
transmitting the first request to the second AP; and
receiving the first response from the second AP.

5. The coordination transmission method of any one of the preceding claims, further comprising:
broadcasting a first broadcast message comprising a coordination capability of the first AP, wherein the coordination capability of the first AP indicates a type of the coordination transmission supported by the first AP; and
receiving a second broadcast message comprising a coordination capability of the second AP, wherein the coordination capability of the second AP indicates a type of the coordination transmission supported by the second AP.

6. The coordination transmission method of claim 5, wherein the type of the coordination transmission comprises at least one of a coordination spatial reuse (CSR) transmission, a coordination beamforming (CBF) transmission, and a coordination time division multiple access (CTDMA) transmission.

7. The coordination transmission method of any one of the preceding claims, further comprising:
transmitting a first leave message to the second AP for tearing down the first coordination agreement between the first AP and the second AP or receiving a second leave message from the second AP for tearing down the first coordination agreement between the first AP and the second AP.

8. The coordination transmission method of claim 7, wherein when a degradation of an overall performance of the coordination transmission is detected, the first AP transmits the first leave message to the second AP or receives the second leave message from the second AP.

9. The coordination transmission method of any one of the preceding claims, further comprising:
recording an identifier of the second AP in a coordination transmission AP list of the first AP under a condition that the establishing of the first coordination agreement between the first AP and the second AP is allowed, and the identifier of the second AP is deleted from the coordination transmission AP list of the first AP when an expiration of a validity period of the second AP being maintained in the first MAP list is detected.

10. The coordination transmission method of claim 1, wherein after the step of the establishing of the first coordination agreement between the first AP and the second AP is allowed, the method further comprising:
exchanging, by the first AP, an operating information with the second AP;
wherein the operating information comprises an information of a plurality of stations (STA) affiliated to a corresponding one of the first AP and the second AP and a plurality of parameters associated with the coordination transmission.

11. The coordination transmission method of claim 2, further comprising:
exchanging, by the first AP, a second request and a second response with a third AP, wherein the second request is used for requesting to establish a second coordination agreement between the first AP and the third AP, and the second response is used for indicating an allowance or a rejection for establishing the second coordination agreement between the first AP and the third AP; and
performing, by the first AP, the coordination transmission with the second AP and the third AP during the TXOP under a condition that the establishing of the first coordination agreement between the first AP and the second AP and the establishing of the second coordination agreement between the first AP and the third AP are allowed and the TXOP is obtained by the first AP.

12. The coordination transmission method of claim 2, further comprising:
receiving a RTS frame from the second AP if the second AP obtains the TXOP;
or, transmitting the RTS frame to the second AP if the first AP obtains the TXOP;
wherein the RTS frame notifies which type of the coordination transmission is to be performed during the TXOP.

13. An access-point (AP), comprising:
a transceiver, configured to transmit and receive data and messages wirelessly; and
a processor, coupled to the transceiver and configured to perform operations comprising:
exchanging, via the transceiver, a first request and a first response with a second AP, wherein the first request is used for requesting to establish a first coordination agreement between the AP and the second AP, and the first response is used for indicating an allowance or a rejection for establishing the first coordination agreement; and
performing, via the transceiver, a coordination transmission with the second AP during an opportunity of transmission (TXOP) under a condition that the establishing of the first coordination agreement between the AP and the second AP is allowed.

14. The AP of claim 13, wherein the TXOP is obtained by either the AP or the second AP after the establishing of the first coordination agreement between the AP and the second AP is allowed.

15. The AP of claim 13 or claim 14, wherein the processor is further configured to:
transmit a first leave message to the second AP for tearing down the first coordination agreement between the AP and the second AP or receive a second leave message from the second AP for tearing down the first coordination agreement between the AP and the second AP.
